# FASCICULE DE BREVET EUROPEEN

(11) **EP 1 687 515 B1**
(45) Date de publication et mention de la délivrance du brevet: **11.06.2008**
(21) Numéro de dépôt: 04805817.6
(22) Date de dépôt: 09.11.2004
(51) Int. Cl.: F01N 11/00, F02D 41/14, F02D 41/02, G05B 13/02, F01N 3/023

(54) **PROCEDE D'ESTIMATION DE QUANTITES DE PARTICULES EMISES DANS LES GAZ D'ECHAPPEMENT D'UN MOTEUR DIESEL D'UN VEHICULE AUTOMOBILE**
VERFAHREN ZUM SCHÄTZEN EINER MENGE VON IN DAS ABGAS EINES DIESELMOTORS EINES KRAFTFAHRZEUGS ABGEGEBENEN TEILCHEN
METHOD FOR ESTIMATING A QUANTITY OF PARTICLES EMITTED INTO THE EXHAUST GAS OF A DIESEL ENGINE FOR A MOTOR VEHICLE

(30) Priorité: 19.11.2003 FR 0313549
(43) Date de publication de la demande: 09.08.2006
(73) Titulaire: RENAULT S.A.S., 92100 Boulogne Billancourt (FR)
(72) Inventeur: DANEAU, Marc, F-92100 Boulogne Billancourt (FR); NETTER, Caroline, F- 75011 Paris (FR)
(86) Numéro de dépôt international: PCT/FR2004/050574
(87) Numéro de publication internationale: WO 2005/052332

(56) Documents cités:
- EP-A- 0 877 309
- DE-C- 19 741 973
- FR-A- 2 804 173
- US-A- 5 625 750
- SERVAIS OUENOU-GAMO: "Diesel Engine Exhaust Emissions Modelling Using Artificial Neural Networks" SAE TECHNICAL PAPER SERIES, no. 1999-01-1163, 4 mars 1999 (1999-03-04), XP002286064
- CHRIS BRACE: "PREDICTION OF DIESEL ENGINE EXHAUST EMISSIONS USING ARTIFICIAL NEURAL NETWORKS" DISPONIBLE SUR INTERNET: <URL: HTTP://WWW.BATH.AC.UK/MECH-ENG/AUTO/PUBLIC ATIONS.HTML>, 10 juin 1998 (1998-06-10), XP002286065 cité dans la demande

## Description

La présente invention concerne un procédé et un système d'estimation de quantités de particules émises dans les gaz d'échappement d'un moteur diesel d'un véhicule automobile.

L'estimation des quantités de particules émises dans les gaz d'échappement d'un moteur diesel de véhicule automobile est utile pour gérer le contrôle moteur et la régénération des moyens de dépollution (filtres à particules), le plus précisément et économiquement possible.

Les modèles de calculs actuels sont soit gourmands en temps de calcul, soit imprécis. Il est souvent inenvisageable d'embarquer ces modèles dans un véhicule du fait de leur complexité de calcul et de la taille mémoire nécessaire. Leur simplification trop brutale détériore trop fortement les performances d'estimation.

Il existe des modèles d'estimation par cartographies. Le nombre de paramètres influant sur ces estimations est relativement important. Une gestion par cartographie deux dimensions impose l'agencement de plusieurs cartographies, dont les cartographies de correction, qui rendent l'estimation complexe. De plus, l'ajout de cartographies l'une derrière l'autre ne permet pas de décrire l'espace de fonctionnement de la même façon qu'un modèle à plus de deux entrées. De tels modèles sont ensuite difficiles à calibrer. De plus, les modèles par cartographies ne rendent pas compte des phénomènes dynamiques qui sont très importants pour ces estimations.

Il existe également des modèles utilisés sur des ordinateurs, mais pas sur un calculateur embarqué, car le peu de mémoire disponible sur un calculateur embarqué implique des temps de calcul incompatibles avec le temps réel. Ces modèles ne prennent pas en compte la puissance limitée des calculateurs. Ces modèles utilisent parfois des mesures d'entrée non connues sur un véhicule, et il n'est soit techniquement possible, sur un véhicule. Ces modèles peuvent également être récursifs, et engendrer des risques de divergence des estimations.

Le document "Virtual Sensors : A real-time neural betwork-based intelligent performance and emissions prediction system for on-board diagnostics and engine control" par Chis Atkinson and Mike Traver, décrit une méthode de prédiction de rejets dans des gaz d'échappement. Cette méthode calcule des taux de rejets instantanés qui sont trop imprécis pour utiliser leur valeur cumulée afin de déclencher une action.

Le document "Prediction of emissions from a turbocharged passenger car Diesel engine using a neural network" par CJ Brace, M Deacon, ND Vaughan, J Charlton, et CR Burrows, décrit une estimation par cartographie qui est trop imprécise et ne tient pas compte des phénomènes dynamiques, comme expliqué ci-dessus.

Le document "Prediction of Diesel Engine Exhaust Emissions using Artificial Neural Networks", par Chris Brace, décrit un système difficilement embarquable sur un véhicule, qui utilise des entrées non disponibles sur un véhicule, et il n'est pas envisageable d'ajouter n'importe quel capteur, à supposer que ce soit techniquement possible.

Le document US 5,625,750 divulgue un procédé suivant la préambule de la revendication indépendante 1.

L'invention a pour but, au vu de ce qui précède, de proposer une solution qui permette d'estimer les émissions de particules (suies et autres polluants) de manière fiable et précise au moyen d'un dispositif sans surcoût, lorsqu'il est embarqué sur un véhicule automobile.

L'invention a également pour but d'aider à la stratégie de calibrage des stratégies de contrôle moteur.

Il est proposé, selon un aspect de l'invention, un procédé d'évaluation d'un système d'estimation de quantités de composés polluants émis dans les gaz d'échappement d'un moteur diesel d'un véhicule automobile comprenant des moyens de régénération d'un filtre à particules solides, une unité de commande électronique pour la gestion du fonctionnement moteur comprenant des mémoires de données, ledit système comprenant également un ou plusieurs réseaux de neurones, des données d'entrée représentatives du fonctionnement du moteur et éventuellement du déplacement du véhicule, lesdites données étant disponibles dans l'unité de commande électronique pour la gestion du fonctionnement moteur sans ajout de capteur et des moyens de cumul des quantités estimées.

Dans un mode de mise en oeuvre préféré, on utilise 10 à 15 neurones. On peut prévoir d'utiliser des bases de données d'apprentissage du ou des réseaux de neurones, lesdites bases de données étant des séquences de roulage du véhicule d'au moins quelques minutes.

Les données utilisées en entrée du ou des réseaux de neurones peuvent comprendre au moins l'un des paramètres suivants :
- le régime de rotation du moteur à deux instants consécutifs t et t-Δt ;
- le débit de carburant à trois instants consécutifs consécutifs t, t-Δt et t-2Δt ;
- la température de l'eau de refroidissement du moteur; et
- la vitesse du véhicule à l'instant t ;
où Δt représente l'intervalle de temps prédéterminé séparant deux instants de mesure consécutifs. On estime au moins la quantité cumulée des suies dans les gaz d'échappement qui seront retenues dans le filtre à particules.

Dans un autre mode de mise en ouvre, les données utilisées en entrée du ou des réseaux de neurones peuvent comprendre au moins l'un des paramètres suivants :
- le régime de rotation du moteur à deux instants consécutifs t et t-Δt ;
- le débit de carburant à trois instants consécutifs t, t-Δt et t-2Δt ;
- la température de l'eau de refroidissement du moteur ; et
- la richesse du mélange à l'instant t ;
où Δt représente l'intervalle de temps prédéterminé séparant deux instants de mesure consécutifs. On estime au moins la quantité cumulée des suies qui seront retenues dans le filtre à particules.

Dans un autre mode de mise en oeuvre adapté à un moteur avec injection par rail commun, les données utilisées en entrée du ou des réseaux de neurones à l'instant t comprennent au moins l'un des paramètres suivants :
- le débit de pré-injection de carburant dans le moteur ;
- le débit de l'injection principale de carburant dans le moteur ;
- le déplacement relatif d'un piston par rapport au point mort haut depuis le moment où la dernière injection de carburant dans le cylindre du piston a débutée ;
- le déplacement relatif d'un piston par rapport au point mort haut depuis le moment où la dernière injection principale de carburant dans le cylindre du piston a débutée ;
- la température de l'eau de refroidissement du moteur ;
- le débit d'air d'alimentation du moteur ;
- la pression à l'intérieur rail commun ; et
- le régime de rotation du moteur;
et les quantités estimées de particules comprennent au moins l'une des quantités suivantes ;
- la quantité cumulée des suies dans les gaz d'échappement qui seront retenues dans un filtre à particules ;
- la quantité cumulée des oxydes d'azote dans les gaz d'échappement ;
- la quantité cumulée des oxydes de carbone dans les gaz d'échappement ; et
- la quantité cumulée des hydrocarbures dans les gaz d'échappement.

Avantageusement, aucune sortie du système ne boucle sur une entrée du système, pour éviter tout problème de stabilité.

Dans un mode de réalisation préféré, le système comprend des moyens pour réinitialiser à zéro les quantités estimées de particules, indépendamment les unes des autres.

Dans un mode de mise en oeuvre préféré, la fenêtre glissante est déterminée de manière à ce que sa taille soit minimale en respectant une erreur d'estimation inférieure à une valeur prédéterminée.

Dans un mode de mise en oeuvre avantageux, la taille de la fenêtre varie entre 0,5 km et 1,5 km pour respecter une erreur d'estimation d'au plus 5g de particules solides émises pour 135 km parcourus par le véhicule.

Dans un mode de mise en oeuvre préféré, une partie des données réservées à l'apprentissage du ou des réseaux de neurones est écartée pour effectuer une validation hors données utilisées.

L'invention peut être utilisée pour commander les moyens de régénération d'un filtre à particules solides à partir d'une comparaison entre la quantité estimée de suies cumulées et une valeur de seuil stockée en mémoire.

L'invention peut également être utilisée pour aider au calibrage des stratégies de contrôle d'un moteur à partir de l'estimation des émissions moteur sur un cycle de roulage.

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est un schéma synoptique illustrant la structure d'un système utilisé dans l'invention ;
- la figure 2 est un schéma synoptique d'un premier mode de mise en oeuvre de l'invention ;
- la figure 3 est un schéma synoptique d'un second mode de mise en oeuvre de l'invention ; et
- la figure 4 est un schéma synoptique d'un troisième mode de mise en oeuvre de l'invention ;

Les cycles d'apprentissage pour le ou les réseaux de neurones sont des cycles de roulage de quelques minutes, par exemple le cycle MNVEG ou le cycle FTP, le cycle MNVEG s'avérant meilleur avec le critère de cumul.

Les critères classiques de calcul d'erreur sur les réseaux de neurones ne prennent pas en compte la problématique consistant à tenir compte de la quantité instantanée et de la quantité cumulée. En effet, les critères pessimistes comme les erreurs maximales prennent en compte le pire cas instantané considérant qu'il est vrai partout tout le temps, et ils considèrent que le cumul serait ce pire cas multiplié par le temps de conduite. Cependant ces cas sont forts improbables, notamment, il est à noter que ces erreurs instantanées extrêmes sont souvent dues à des effets de transition ou dynamisme (accélération brutale, freinage brutal...) qui ne peuvent pas se répéter sur une longue durée.

Par ailleurs, les critères tels que l'erreur absolue moyenne ou l'erreur quadratique moyenne ne prennent pas en compte que le débit prédit oscille autour du débit réel. Dans ce cas, l'erreur absolue moyenne et l'erreur quadratique moyenne seront importantes, alors que la valeur de cumul sera correcte

Enfin, regarder l'erreur d'un cumul sur un cycle entier suppose que cette séquence qu'est le cycle est significative pour ce calcul, donc indivisible. En effet, on peut obtenir une erreur moyenne nulle sur la séquence entière en sous-estimant le cumul sur une partie du cycle et en le surestimant sur une autre. Mais si ces parties peuvent être répétées indépendamment, l'erreur accumulée sera grande. Par exemple, si le cycle contient du roulage en ville, à basse vitesse, où le modèle surestime les émissions, et du roulage sur autoroute, pour lequel le modèle sous-estime les émissions, on accumule alors un gros écart entre prévision et réalité en roulant exclusivement dans des conditions spécifiques à une des parties. Si on ne roule qu'en ville, on va toujours surestimer les émissions et jamais compenser par une sous-estimation sur autoroute. Au contraire, si ces deux parties étaient l'accélération et la décélération, ce problème ne se poserait pas car dans n'importe quel roulage, il y en a toujours autant. Le critère de cumul sur une fenêtre glissante est un critère intermédiaire entre ces deux extrêmes. Il consiste à prendre l'erreur absolue maximale de la quantité accumulée sur une certaine distance, par exemple 1 km.

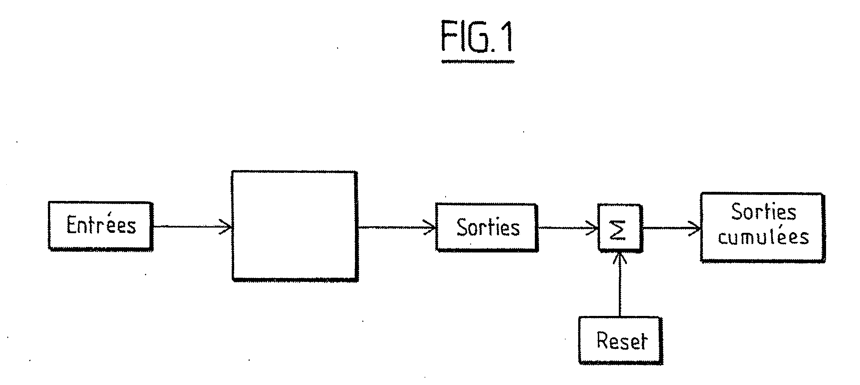

La figure 1 représente l'architecture générale d'un système d'estimation de quantités de composés polluants émise dans les gaz d'échappement d'un moteur diesel, selon l'invention. Le système comprend un ou des réseaux de neurones 1 recevant des données en entrée 2, et fournissant des quantités estimées 3 en sortie. Le système comprend en outre des moyens de cumul 4 des quantités estimées pour fournir des quantités cumulées 5. Le système comporte également des moyens 6 pour réinitialiser à zéro les quantités estimées de composés polluants, indépendamment les unes des autres. Ces moyens 6 sont aussi appelés reset 6.

Le ou les réseaux de neurones 1 sont agencés, comme cela est classique, sous la forme de couches constituant chacune un module de traitement. Ces modules son reliés entre eux par des éléments de liaison qui s'étendent entre les neurones de chaque couche selon une configuration spécifique. Ainsi, par analyse de la valeur de sortie des neurones, c'est-à-dire de leur activité, il est possible de déterminer le degré de correspondance entre une signature correspondant à une activité à analyser et une signature d'une activité connue. Les réseaux neuronaux 1 sont des architectures bien connues d'un homme du métier. Elles ne seront donc pas décrites en détail par la suite.

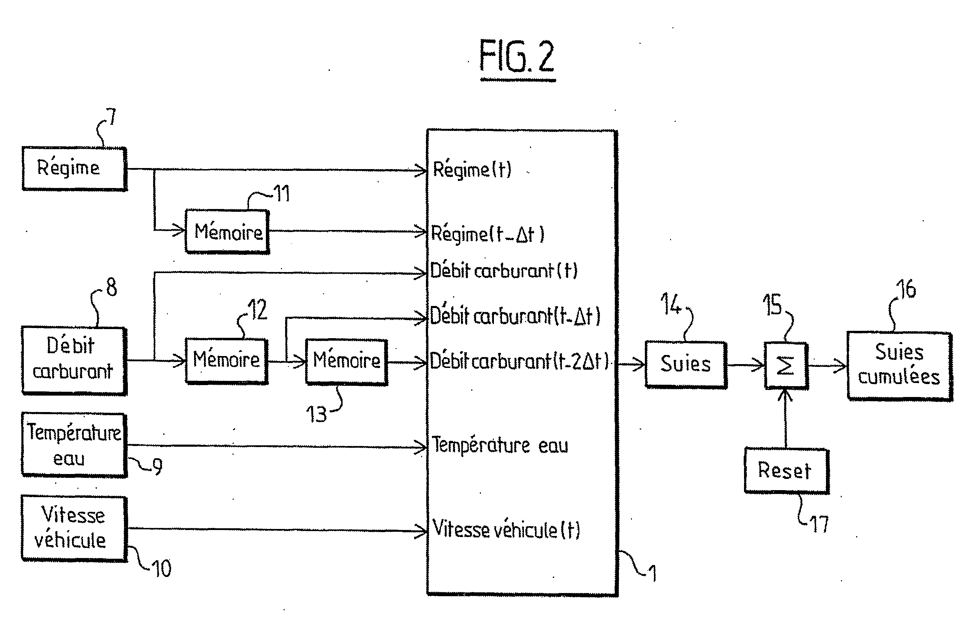

Sur la figure 2, les références aux éléments semblables à ceux de la figure 1 ont été conservées. La figure 2 représente un système selon l'invention, qui comprend un ou des réseaux de neurones 1 recevant en entrée des données représentatives du fonctionnement du moteur et éventuellement du déplacement du véhicule. Les données comprennent au moins le régime 7 de rotation moteur, le débit de carburant 8, la température 9 de l'eau de refroidissement du moteur, et la vitesse 10 du véhicule. Le système comprend également des mémoires 11, 12 et 13 pour stocker des données, et fournit en sortie au moins la quantité cumulée 16 de suies. Le système comprend en outre des moyens 15 de cumul des quantités estimées 14 de suies pour fournir la quantité cumulée 16 de suies, et comprend également des moyens 17 pour réinitialiser à zéro la quantité cumulée 16 de suies estimée, appelé aussi reset.

L'unité électronique de calcul gérant le fonctionnement du moteur fournit au système les données en entrée, à savoir, le régime 7 de rotation moteur, le débit de carburant 8, la température 9 de l'eau de refroidissement du moteur, et la vitesse du véhicule 10. L'intervalle de temps séparant deux instants de prise en compte de données d'entrée est une durée prédéterminée Δt. La mémoire 11 va stocker la valeur précédente du régime 7 de rotation du moteur, et pourra alors, à l'instant t, fournir au système les valeurs du régime 7 de rotation moteur aux instants t et t-Δt. Les mémoires 12 et 13 vont stocker les deux valeurs précédentes du débit de carburant 8, ce qui permettra de fournir au système, à l'instant t, les valeurs du débit de carburant 8 aux instants t, t-Δt, et t-2Δt. Les moyens 15 de cumul des quantités estimées 14 de suies permettent d'estimer le cumul 16 des suies émises, et ce cumul 16 peut être remis à zéro par le reset 17 quand le filtre à particules a été régénéré. Les données en entrée du système sont disponibles dans les unités de commande électroniques classiques sans avoir à ajouter de nouveau capteur.

Le cycle d'apprentissage utilisé est le cycle de roulage européen MNVEG. On fixe une limite maximale de l'erreur pour choisir la taille minimale de la fenêtre glissante. La quantité autour de laquelle il faut régénérer un filtre à particules solides est de 20g, et on veut un intervalle de confiance de 25%, soit une erreur inférieure à 5g. Comme le moteur produit 20g de particules de suies tous les 135 km, on s'autorise alors une erreur moyenne de 5g par 135 km, soit 37 mg par km. En ayant fixé cette limite, une étude de l'effet de la longueur de la fenêtre glissante sur l'erreur de cumul donne pour résultat que l'erreur de cumul décroît avec la taille de la fenêtre glissante qui augmente. Pour obtenir une erreur sur le cumul inférieure à la limite imposé (5g par 135 km), il convient de prendre une fenêtre glissante de 1,5 km.

La détermination du nombre optimal de neurones est effectuée notamment en fonction du fait que le système est embarqué et impose des restrictions sur le nombre total de paramètres. Après génération de modèles, il apparaît que 10 à 15 neurones suffisent pour représenter la complexité de la fonction sous-jacente. La détermination du nombre d'instants des données influençant le calcul du cumul est également effectué de manière empirique.

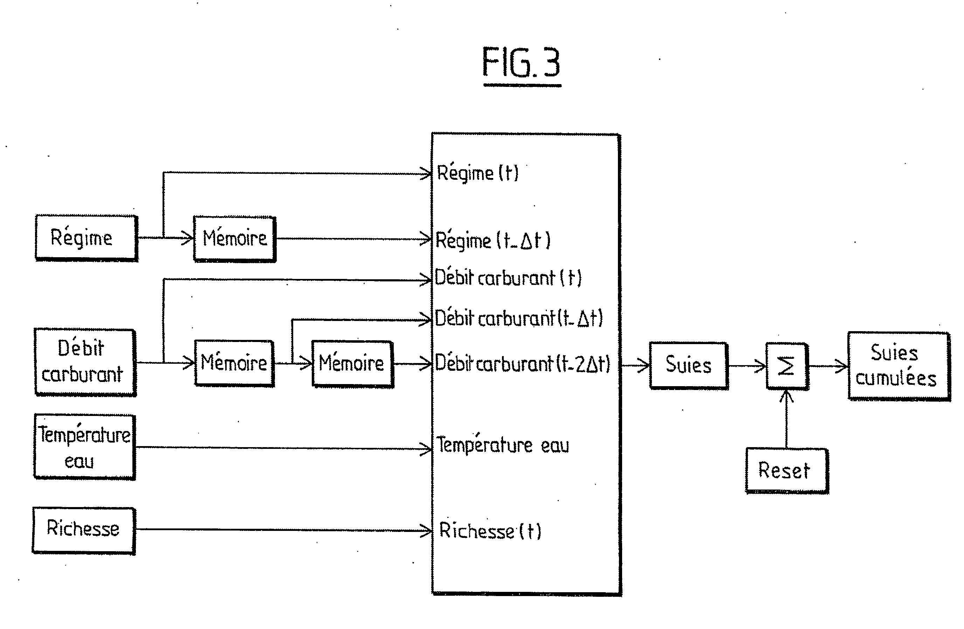

Sur la figure 3, les références aux éléments semblables à ceux des figures 1 et 2 ont été conservées. La figure 3 décrit un système selon l'invention, qui comprend un ou des réseaux de neurones 1 recevant en entrée des données représentatives du fonctionnement du moteur, lesdites données comprenant au moins le régime 7 de rotation du moteur, le débit de carburant 8, la température 9 de l'eau de refroidissement du moteur, et la richesse 18 du mélange (rapport représentant la proportion de carburant dans le mélange carburant/air alimentant le moteur). Le système comprend également des mémoires 11, 12 et 13 pour stocker des données, et fournit en sortie au moins la quantité cumulée 16 de suies. Le système comprend en outre des moyens 15 de cumul des quantités estimées 14 de suies pour fournir la quantité cumulée 1.6 de suies, et comprend également des moyens 17 pour réinitialiser à zéro la quantité cumulée 16 estimée de suies, appelée aussi reset 17.

L'unité électronique de calcul gérant le fonctionnement du moteur fournit au système les données en entrée, à savoir le régime 7 de rotation du moteur, le débit de carburant 8, la température 9 de l'eau de refroidissement du moteur, et la richesse 18 du mélange alimentant le moteur. L'intervalle de temps séparant deux instants de prise en compte de données d'entrée est une durée prédéterminée Δt. La mémoire 11 va stocker la valeur précédente du régime 7 de rotation du moteur, et pourra alors, à l'instant t, fournir au système les valeurs du régime 7 de rotation du moteur aux instants t et t-Δt. Les mémoires 12 et 13 vont stocker les deux valeurs précédentes du débit de carburant 8, ce qui permettra de fournir au système, à l'instant t, les valeurs du débit de carburant 8 aux instants t, t-Δt, et t-2Δt. Les moyens 15 de cumul des quantités estimées 14 de suies permettent d'estimer le cumul 16 des suies émises, et ce cumul peut être remis à zéro par le reset 17, quand le filtre à particules a été régénéré. Les données d'entrée du système sont disponibles dans les unités de commande électroniques classiques sans avoir à ajouter de nouveau capteur.

Le cycle d'apprentissage utilisé est encore le cycle de roulage européen MNVEG. On s'autorise encore une erreur moyenne de 5g par 135 km, soit 37 mg par km. Avec ce système, on peut réduire la taille de la fenêtre glissante à 0,5 km, tout en respectant la limite d'erreur de cumul fixée. On garde également 10 à 15 neurones.

Ces deux systèmes selon l'invention, décrit sur les figures 2 et 3 peuvent être mis en application afin de permettre de commander les régénérations du filtre à particules, en fonction de l'estimation de la quantité cumulée 16 de suies par l'un de ces systèmes.

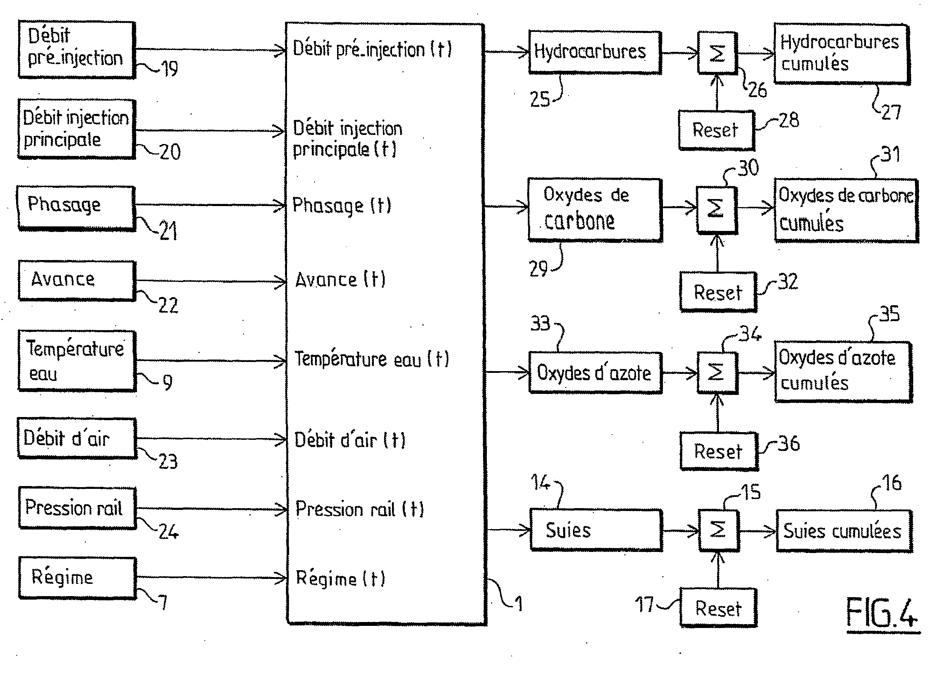

Sur la figure 4, les références aux éléments semblables à ceux des figures 1, 2 et 3 ont été conservées. La figure 4 décrit un système selon l'invention, qui comprend un ou des réseaux de neurones 1 recevant en entrée des données représentatives du fonctionnement du moteur, lesdites données comprenant au moins le débit de pré-injection 19 (débit de l'injection précédant l'injection principale), le débit de l'injection principale 20, le phasage 21 (déplacement relatif d'un piston par rapport au point mort haut depuis le moment où la dernière injection (pré-injection ou post-injection) de carburant dans le cylindre du piston a débutée, généralement exprimé en degrés vilebrequin), l'avance 22 (déplacement relatif d'un piston par rapport au point mort haut depuis le moment où la dernière injection principale de carburant dans le cylindre du piston a débutée, généralement exprimé en degrés vilebrequin), la température 9 de l'eau de refroidissement du moteur, le débit d'air 23 d'alimentation du moteur, la pression 24 à l'intérieur du rail commun (pression dans la conduite d'alimentation en carburant), et le régime 7 de rotation du moteur.

Toutes ces données en entrée sont fournies par l'unité électronique de calcul gérant le fonctionnement du moteur. Les moyens 26 de cumul des quantités estimées 25 d'hydrocarbures dans les gaz d'échappement permettent d'estimer le cumul 27 des hydrocarbures émis dans les gaz d'échappement, et ce cumul peut être remis à zéro par le reset 28. Les moyens 30 de cumul des quantités estimées 29 d'oxydes de carbone dans les gaz d'échappement permettent d'estimer le cumul 31 des oxydes de carbone émis dans les gaz d'échappement, et ce cumul 31 peut être remis à zéro par le reset 32. De même, les moyens 34 de cumul des quantités estimées 33 d'oxydes d'azote dans les gaz d'échappement permettent d'estimer le cumul 35 des oxydes d'azote émis dans les gaz d'échappement, et ce cumul peut être remis à zéro par le reset 36. De plus, les moyens 15 de cumul des quantités estimées 14 de suies dans les gaz d'échappement permettent d'estimer le cumul 16 des suies émises dans les gaz d'échappement, et ce cumul peut être remis à zéro par le reset 17.

Le cycle d'apprentissage utilisé est encore le cycle de roulage européen MNVEG. On s'autorise encore une erreur moyenne de 5g par 135 km, soit 37 mg par km. Avec ce système, on peut réduire la taille de la fenêtre glissante à 0,5 km, tout en respectant la limite d'erreur de cumul fixée. On garde également 10 à 15 neurones.

Ce système selon l'invention, décrit sur la figure 4, peut être mis en application pour aider au calibrage des stratégies de contrôle moteur à partir de l'estimation des émissions du moteur sur un cycle de roulage.

L'invention permet de prédire les émissions de polluants d'un moteur de véhicule diesel, et notamment de particules solides, de manière à pouvoir gérer les moyens de régénération des dispositifs de dépollution, comme le filtre à particules.

L'invention permet également, d'aider au calibrage des stratégies de contrôle moteur.

Les données utilisées en entrée par l'invention sont des données déjà disponibles dans l'unité électronique de commande du fonctionnement du moteur, sans avoir à ajouter de dispositif ou capteur supplémentaire.

L'invention permet de prendre en compte des phénomènes non linéaires, et ne contient pas de bouclage des sorties vers les entrées, ce qui évite les problèmes d'instabilité de bouclage.

L'invention permet en outre d'utiliser des données dynamiques et statiques, et d'avoir beaucoup d'essais dans un temps court comparé à beaucoup d'autres types de modélisation statiques.

## Revendications

1. Procédé d'évaluation d'un système, d'estimation de quantités de composés polluants émis dans les gaz d'échappement d'un moteur diesel d'un véhicule automobile comprenant des moyens de régénération d'un filtre à particules solides, une unité de commande électronique pour la gestion du fonctionnement moteur comprenant des mémoires de données, ledit système comprenant un ou plusieurs réseaux de neurones (1), des données d'entrée (2) représentatives du fonctionnement du moteur et éventuellement du déplacement du véhicule, lesdites données (2) étant disponibles dans l'unité de commande électronique pour la gestion du fonctionnement moteur sans ajout de capteur, et des moyens de cumul (4) des quantités estimées (3), **caractérisé en ce que** l'on évalue la meilleure configuration du ou des réseaux de neurones (1) par calcul d'erreur sur les quantités de sortie (3) par cumul sur une fenêtre glissante.

2. Procédé selon la revendication 1, **caractérisé en ce que** la fenêtre glissante est déterminée de manière à ce que sa taille soit minimale en respectant une erreur d'estimation inférieure à une valeur prédéterminée.

3. Procédé selon la revendication 2, **caractérisé en ce que** la taille de la fenêtre correspondant à un déplacement du véhicule varie entre 0,5 km et 1,5 km pour respecter une erreur d'estimation d'au plus 5g de particules solides émises pour 135 km parcourus par le véhicule.

4. Procédé selon l'une quelconque des revendications 1 à 3, **caractérisée en ce qu'une** partie des données réservées à l'apprentissage du ou des réseaux de neurones (1) est écartée pour effectuer une validation hors données utilisées.

## Claims

1. Method for evaluating a system for estimating quantities of pollutants emitted in the exhaust gases of a diesel engine of a motor vehicle comprising means for regenerating a solid-particle filter, an engine management electronic control unit comprising data memories, the said system comprising one or more neural network(s) (1), input data (2) representative of the operation of the engine and possibly of the movement of the vehicle, the said data (2) being available in the engine management electronic control unit without the addition of sensors, and summing means (2) for summing the estimated quantities (3), **characterized in that** the best configuration of the neural network(s) (1) is evaluated by calculating the error on the output quantities (3) by summing over a sliding window.

2. Method according to Claim 1, **characterized in that** the sliding window is determined in such a way that its size is minimized while at the same time keeping the estimation error smaller than a predetermined value.

3. Method according to Claim 2, **characterized in that** the size of the window corresponding to a movement of the vehicle varies between 0.5 km and 1.5 km in order to keep the estimation error down to no more than 5 g of solid particles emitted per 135 km travelled by the vehicle.

4. Method according to any one of Claims 1 to 3, **characterized in that** some of the data which are set aside for learning by the neural network(s) (1) is set aside for carrying out a validation independent of the data that are used.

## Patentansprüche

1. Verfahren zum Bewerten eines Systems zum Schätzen von Mengen von Schadstoffgemischen, die im Abgas eines Dieselmotors eines Kraftfahrzeugs emittiert werden, das Mittel zum Regenerieren eines Festkörperpartikelfilters und eine elektronische Steuereinheit für die Steuerung des Motorbetriebs, die Datenspeicher enthält, aufweist, wobei das System ein oder mehrere neuronale Netze (1), Eingangsdaten (2), die für den Betrieb des Motors und eventuell für die Bewegung des Fahrzeugs repräsentativ sind, wobei die Daten (2) in der elektronischen Steuereinheit für die Steuerung des Motorbetriebs ohne Hinzufügung eines Sensors verfügbar sind, und Mittel (4) zum Kumulieren der geschätzten Mengen (3) aufweist, **dadurch gekennzeichnet, dass** die beste Konfiguration des oder der neuronalen Netze (1) durch Berechnen des Fehlers in den Ausgangsmengen (3) durch Kumulation in einem Gleitfenster bewertet wird.

2. Verfahren nach Anspruch 1, **dadurch gekennzeichnet, dass** das Gleitfenster in der Weise bestimmt wird, dass seine Größe unter Berücksichtigung eines Schätzfehlers, der kleiner als ein vorgegebener Wert ist, minimal ist.

3. Verfahren nach Anspruch 2, **dadurch gekennzeichnet, dass** sich die Größe des Fensters, das einer Bewegung des Fahrzeugs entspricht, zwischen 0,5 km und 1,5 km verändert, um einen Schätzfehler von höchstens 5 g von emittierten Festkörperpartikeln auf 135 km, die von dem Fahrzeug gefahren werden, zu berücksichtigen.

4. Verfahren nach einem der Ansprüche 1 bis 3, **dadurch gekennzeichnet, dass** ein Teil der Daten, die für das Lernen des oder der neuronalen Netze (1) reserviert sind, entnommen wird, um eine Validierung außerhalb verwendeter Daten vorzunehmen.
